# EUROPEAN PATENT APPLICATION

(11) **EP 1 160 603 A1**
(43) Date of publication of application: **05.12.2001**
(21) Application number: 01112531.7
(22) Date of filing: 23.05.2001
(51) Int. Cl.: G02B 6/44

(54) **An optical fibre distribution rack**

(30) Priority: 01.06.2000 GB 0013278
(71) Applicant: Tyco Electronics Raychem NV, 3010 Kessel-lo (BE)
(72) Inventor: van Overmeir, Peter, 3000 Leuven (BE)
(74) Representative: Beitsma, Gerhard Romano

(57) **Abstract**

A distribution rack (10) for an optical fibre transmission system has connector support means (19) for supporting an array of connectors (21) for connecting optical fibres, and optical fibre organiser means (26) for storing an excess length of optical fibre associated with each connector to allow repositioning of a connector in the array. The connector support means (19) are themselves supported on a support member (14) defining a support plane. The connector support means (19) are located on one side of the said support plane and the optical fibre organiser means (26) are located on the other side of the said support plane, the support member (14) being movable between two positions in which opposite faces thereof are accessible respectively.

## Description

The present invention relates generally to a distribution rack for an optical fibre transmission system.

Optical fibres of a telecommunications transmission system are grouped together in bundles or cables at the ends of which it is necessary to make connections for distribution of the fibres to various different destinations. This is achieved by splicing a connector fibre to the end of each of the optical fibres in the cable, and positioning the connector of the connector fibre in a holder or support, frequently termed a "patch panel" for connection by a further connector of a second connector fibre leading to the destination.

Such connections are supported in distribution frames or racks which may be located within a building or in a separate casing or housing at some point along the route of the cable where it is intended for the fibres to be diverted to different destinations.

Increasing telecommunications traffic has made it desirable for such distribution frames or racks to be ever more densely packed with connectors and it is a common and continuing requirement that the overall dimensions of the distribution frame or rack should be maintained as small as possible whereby not to occupy more space within a building or other location than is absolutely necessary. For this reason the connectors are mounted with a high density which, in itself, leads to certain problems, particularly the difficulty of access to connectors for repair or maintenance, or when it is subsequently necessary to make different connections in order to vary the routes of the fibres from the cable to different destinations.

Another problem encountered in such distribution racks is the need to maintain a certain excess length of optical fibre associated with each connector in order to allow the connector to be positioned in a different location in the connector array. The greatest length of optical fibre needed to pass from the entry point to the distribution frame to the furthermost connector location in the array on the patch panel is thus required for every connector although, of course, those connectors more closely located to the entry point do not need such a long fibre initially. It is also necessary in some circumstances to account for the possibility that a fresh splice may be required between the fibre of the cable and the connector fibre, for which purpose a certain excess length of each fibre must be left in order to allow the junction point to be withdrawn from the distribution rack onto splicing equipment where an appropriate splice can be made. The excess length of optical fibre must be stored within the distribution rack in an orderly and organised manner to allow subsequent access without tangling or confusion with other fibres, and the fibres themselves must be protected from tight bends due to the attenuation of signals which occurs if the fibre is turned through less than a minimum bend radius.

US Patent 5,497,444 describes a high density fibre distribution frame in which some of these problems are addressed, and in which a plurality of modules of connector supports are mounted in such a way that each module (comprising a single line of six connector supports) can be displaced rectilinearly parallel to its length in one direction or the other to displace the connectors from the overall array and expose them for access by an operator. The array is positioned within an overall distribution frame in such a way that the plane of the array faces the front from which access by an operator is gained so that an operator may withdraw connectors by pulling them towards himself and reposition them by pushing them into a socket formed by the opposite part of the connector mounted in the array. Supports for the optical fibres leading from the connectors are mounted between the access location and the connectors themselves and a set of connector modules may be rocked as a unit between a normal operative position in which the connector locations lie in a vertical plane, downwardly through about 30° to facilitate access to the rear of the connector array forming the patch panel. In fact, in normal use, "patching" that is changing connections of the fibres is usually done from the front of the panel by withdrawing connectors from an existing connection and repositioning them to an alternative position. Access to the other half of the connector pair is rarely needed.

Conventionally the splices between incoming fibres and connector fibres are held supported on trays which also provide locations for storage of the excess lengths, and fibres then lead from these trays to a patch panel located to one side of the trays. Trays may be held in a stack or array allowing them to be turned with respect to one another so that access to the splices is available, or may be held in sliding drawers which can be pulled out to allow access to the splices. In each case, however, the connector array forming the patch panel is located at a different point in the distribution rack or frame from the splice holders. Sliding drawers or shelves have a number of disadvantages. First the amount of excess fibre needed is greater than that merely to allow repatching because sufficient has to be left to accommodate the sliding of the drawers or shelves in addition to the patching changes. If even one fibre is not long enough it can be strained by the opening of the drawer or limit the sliding movement detrimentally: moreover, when the drawer is closed there is also the risk of entrapment leading to damage to or entanglement of fibres.

In US 5,758,003 another connector configuration is described in which individual sets of connector module assemblies are mounted in first and second vertical arrays on opposite sides of the support structure, with assemblies of each of the arrays being spaced from one another in a vertical spacing to define a plurality of troughs between each of the assemblies. A plurality of troughs extending rearwardly into rear troughs are also provided, these troughs acting to support optical fibres leading to and from the connectors, in particular to provided storage for the excess lengths of connector fibre required to allow changes to be made to the patching arrangement. Access to the connectors can be improved by sliding one of the modules with respect to the frame. Again, however, the connector array is spaced from the location at which the splices are made.

The present invention seeks to provide an improved distribution rack in which unnecessary movement of fibres is minimised and in which it is not necessary to provide sliding drawers for the splices and stored excess lengths of connector fibre, nor to position the connector arrays to be slidable in order to gain access to them for making connections or repatching the connections once made. The basic aim of the invention is to provide a distribution rack which can accommodate a large number of fibres in a restricted space, with high density of connectors whilst still allowing enough space for access and at the same time minimising the amount of disturbance to the fibres in gaining access for subsequent repatching.

According to one aspect of the present invention, therefore, there is provided a distribution rack for an optical fibre transmission system, having connector support means for supporting an array of connectors for connecting optical fibres, and optical fibre organiser means for storing an excess length of optical fibre associated with each connector to allow repositioning of a connector in the array, in which the said connector support means are themselves supported on a support member defining a support plane, characterised in that the said connector support means are located on one side of the said support plane and the optical fibre organiser arrangement are located on the other side of the said support plane, the support member being movable between two positions in which opposite faces thereof are accessible respectively.

With respect to known distribution racks, therefore, the rack of the present invention may be termed a "shelfing" rack.

In a preferred embodiment of the present invention the said connector support means comprise an appertured carrier for a plurality of connectors, which defines a connection plane in which corresponding parts of adjacent connectors lie, the said connection plane lying substantially orthogonally of the said support plane such that connectors supported by the said connector support means lie generally parallel to the said support plane.

In prior art arrangements such as that described in US 5,758,003 or US 5,497,444 the frames carrying the sets or modules of connectors define respective parallel planes and excess length of optical fibre is stored on the same side of the respective plane as the connector is located.

The connector support means may have the plurality of apertures in rows and columns for supporting respective connectors in an array. Such a connector support is referred to in the art as a "patch panel" to one side of which the cooperating connector parts are fitted in a semi-permanent configuration, and on the other side of which the connectors are fitted in such a way that they can be changed readily when it is desired to change the connection configuration.

In one embodiment of the invention connector fibres from the connector array or patch panel pass around one edge of the said support member from the connector array to the said optical fibre organiser means, and the optical fibre organiser means may comprise a plurality of projections extending from the said support member on which the (excess length) fibre may be carried in the loops.

The said support member preferably also has means for supporting a plurality of splices between incoming fibres and one end of the respective connector fibres provided with connectors at their other ends. The support member thus serves the dual function previously provided by different parts of a distribution rack or frame, of supporting the patch panel and the splice trays.

In order to improve access to the splice trays, patch panel and excess fibre organiser means the support member is preferably turnable about an axis lying in the said support plane defined thereby, between two end positions in which opposite sides of the support plane are accessible from a given access position. Alternatively, however access to each side of the support member may be gained by moving this with respect to a fixed distribution rack or frame on which the support member is carried without of course, moving this away from the rack or frame. Lateral sliding of the support member from one position to another to allow access to one side or the other may be the way in which this can be achieved.

The provision of the patch panel and the splice support means on one side of the support member also offers the considerable advantage of minimising the length of fibre required to run from a splice to a patch connector.

In a distribution rack formed as an embodiment of the invention the optical fibres entering the rack may pass through one or more guide duct positioned between or adjacent two such support members carried on a back plate about which the or each support member is turnable. The maximum length of excess fibre required to reach from the entry point to the furthermost connector location in the patch panel is thus minimised.

The support member itself may be a panel or a frame carrying the associated components, and in either case may be turnable about a substantially vertical axis when the distribution rack is mounted in a normal orientation of use. Alternatively, however the axis may be horizontal or even inclined at an angle to the horizontal less than 90°. This latter may have the effect of tilting the axis about which the support members turn away from an operator to mark the access positions more ergonomically satisfactory.

Bend control means determining a minimum radius about which the fibres can turn may be provided at the edge of the support member about which the fibres pass from one side to the other, and this may be in the form of a continuous cylindrically curved support.

A distribution rack may be formed with a plurality of support members each carried by its pivoted edge at or adjacent a back plate with the free edges about which the fibres pass being closest to the access point for splicing, patching and overlength storage.

Embodiments of the present invention will now be more particularly described, by way of example, with reference to the accompanying drawings, in which:
Figure 1 is a perspective view of a support member of a distribution rack formed as an embodiment of the present invention;
Figure 2 is a similar perspective view showing the rear face of the one of the support members illustrated in Figure 1;
Figure 3 is a plan view from above of a part of a distribution rack illustrating the position of two such members in the rack;
Figure 4 is a partial plan view of one of the support members illustrated in Figure 3, showing it in an alternative position of use giving access for patching and overlength storage;
Figure 5 is a plan view of a further alternative embodiment; and
Figure 6 is a face view of another embodiment.

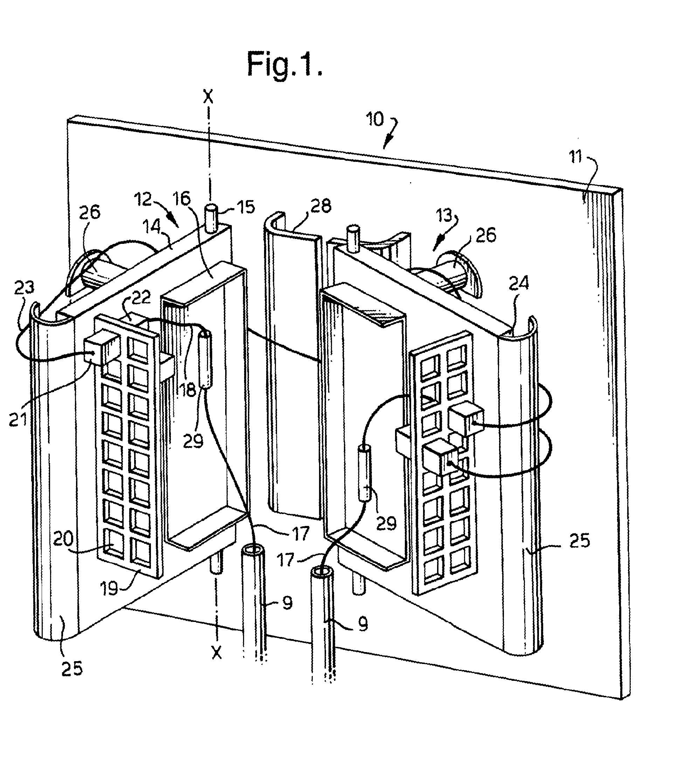

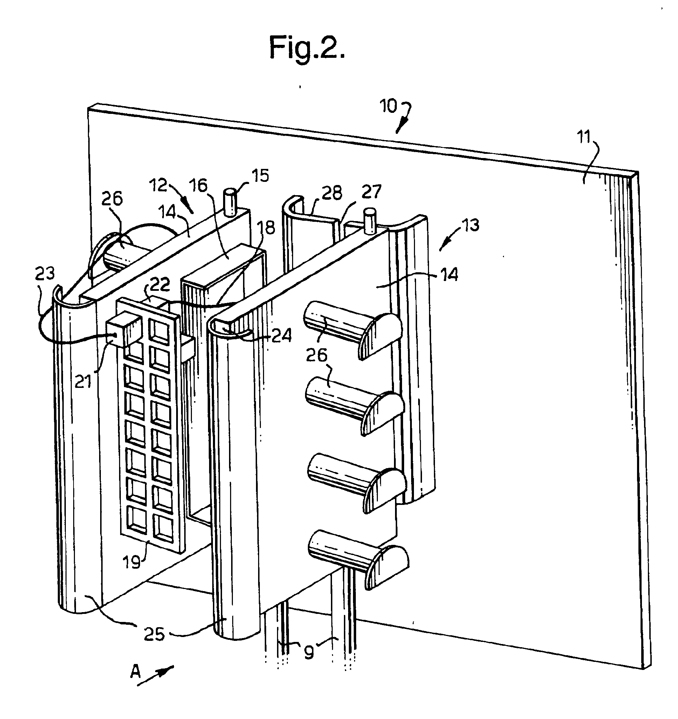

Referring now to Figures 1 and 2 there is shown a part of an overall distribution rack 10 for optical fibres. The components shown are supported on a back plate generally indicated 11 and there are shown illustrated two combined units 12, 13 which are of the same configuration with the exception that they are mirror images of one another. A detailed description of the relevant components of either unit will, therefore, completely describe the corresponding components of the other unit.

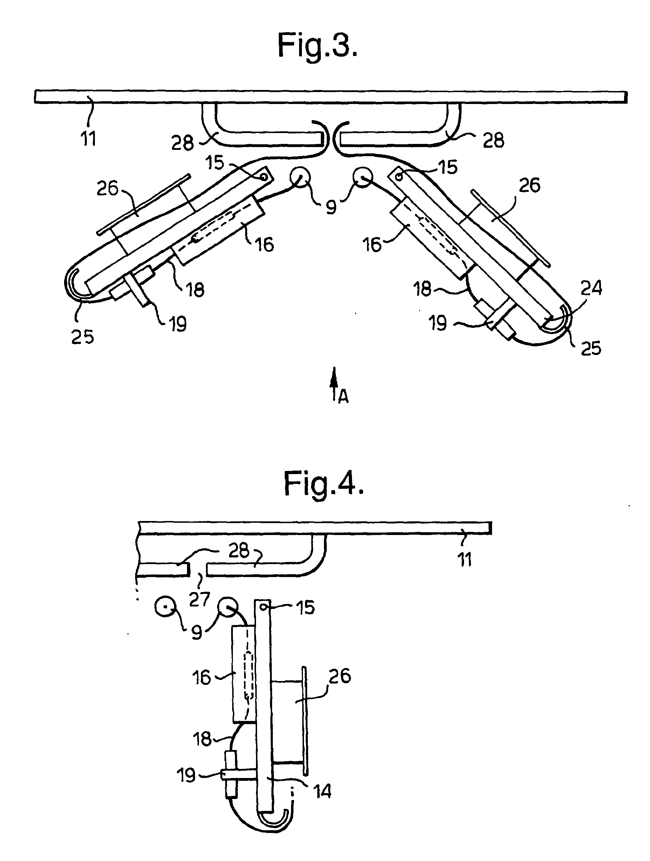

As shown in Figure 1 the units 12, 13 each comprise a generally rectangular support panel 14 pivotally mounted on supports (not shown, but which may be projecting arms or the panels separating vertically stacked arrays of units for turning movement about an axis x-x generally parallel to and coincident with one pivoting edge 15 to enable the panel 14 to be turned, as can be seen in Figures 2 and 3, between opposite end positions represented by the positions of the right hand panel as shown in Figures 1 and 2). This allows turning of the panel 14 through approximately 90° (perhaps slightly more) such that the opposite faces of the panel 14 are accessible from the front of the rack as represented by the arrow A in Figures 2 and 3.

The panel 14 carries a sub unit generally indicated 16 for housing splice connections between incoming optical fibres entering through a duct 9. This duct 9 may be positioned closely adjacent the pivoted edge 15 of a panel 14, as shown in Figure 1, or alternatively may be mounted on the panel 14 itself such that turning the panel does not change the relationship between the fibres and the splicing unit 16. One such fibre is illustrated in Figure 1 and identified with the reference numeral 17. Connector fibres, one example of which is identified with the reference numeral 18, are also shown in Figure 1. The connector fibre 18 leads from a splice 29 in the splice unit 16 to a patch panel generally indicated 19 comprising a perforated plate having a plurality of generally rectangular appertures 20 for receiving connectors 21, 22 to form releasable connections between the connector fibres 18 leading from the splice unit 16 to the patch panel 19 and further fibres (an example of which is identified with reference numeral 23) leading on from the patch panel 19 to a destination from the distribution rack 10.

The route for the fibres 23 passes around the free edge, generally indicated 24 of the panel 14, provided with a cylindrically curved minimum bend radius protector 25 which ensures that the fibres 23 cannot be bent through a tighter turn than the minimum bend radius.

On the opposite side of the support panel 14 from the patch panel 19 are mounted a plurality of optical fibre management supports 26 over which the fibres 23 are passed in open loops, and from where they pass to a slot 27 in a central duct 28 on the back plate 11 from which they pass out from the rack 10.

As can be seen in Figures 3 and 4, the two support panels 14 may be positioned, as shown in Figure 3, each inclined away from the other so that the splicing units 16 are accessible from the front for splicing functions, and each can be turned, as illustrated in Figure 4, to a position in which the panel 14 lies perpendicular to the back plate 11 allowing an operator to gain access both to the patch panel 19 which then lies parallel to the back plate (orthogonal to the support panel 14) to facilitate the introduction and removal of connectors 22 in performing the patching function, and also allows access to the fibre optic supports 26 of the optical fibre management system allowing these to be positioned appropriately in their path back to the slot 27 in the central duct 28 by which the fibres exit the rack 11.

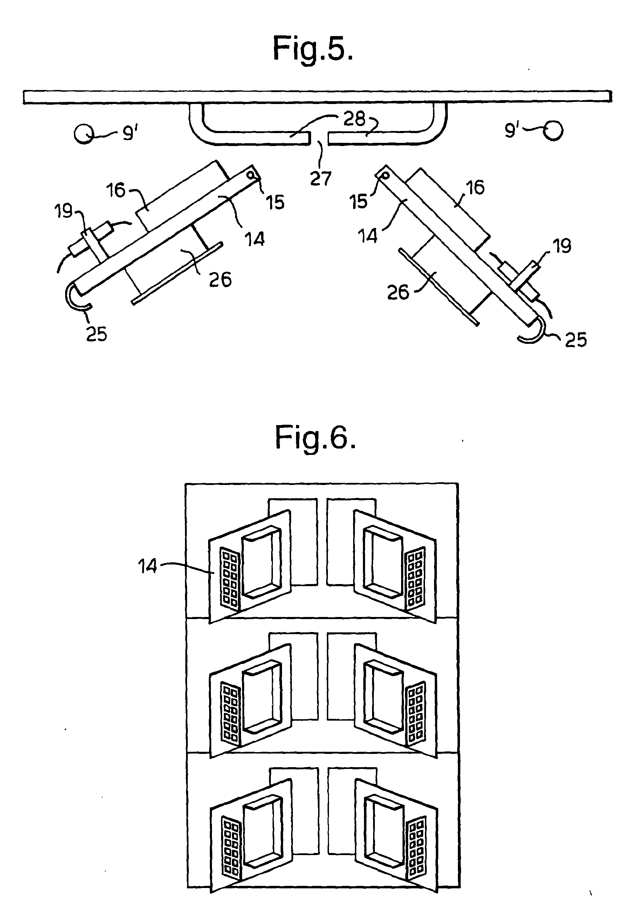

In the alternative embodiment illustrated in Figure 5 the patch panel and splice unit are positioned on the opposite sides of the support panel 14 from the positions they occupy in the embodiments of Figures 1 and 2. This allows the inlet duct 9 carrying fibres leading to the splice unit 16 to be positioned, as shown in Figure 5, (and identified 9) on the side of each panel 14 remote from the other (whereas the duct 9 in the embodiment of Figure 1 is located between the two panels 14) and has the further advantage that the optical fibres leading from the fibre management system comprising the supports 26 can follow a more direct path to the central duct 28.

As illustrated in Figure 6, a rack may comprise a plurality of pairs of panels 14 each carrying a suitable number of connectors on a patch panel for a subdivision of the connections to be made by the rack. Figure 6 illustrates a configuration in which there are six panels in three levels of two pairs each although, of course, other configurations may be utilised and, indeed, taller panels occupying the same space as the three pairs of panels illustrated in Figure 6 may alternatively be utilised. Likewise, pairs of panels 14 may be positioned back to back, that is with their respective back plates 11 adjacent one another so that they "face" in opposite directions for circumstances where access to both sides of a rack may be available. This is, of course, not suitable for wall-mounted racks where access is only available from one face.

In an alternative embodiment (not shown) the panels 14 may be mounted so as to be laterally slidable parallel to the plane of the back plate 11, in which case they need not necessarily be pivotally mounted (although combined pivoting and sliding movement minimises the magnitude of and movement required to gain access).

Although an embodiment in which the axis x-x is vertical has been described herein, it will be understood that this axis could be horizontal or even inclined at less than 90° to the horizontal, for example to slope the panels 14 backward like the surface of a lectern.

It will therefore be understood by those skilled in the art that the present invention is not limited to the embodiments shown and that many additions and modifications are possible without departing from the scope of the present invention as defined in the appending claims.

## Claims

1. A distribution rack (10) for an optical fibre transmission system, having connector support means (19) for supporting an array of connectors (21) for connecting optical fibres, and optical fibre organiser means (26) for storing an excess length of optical fibre associated with each connector to allow repositioning of a connector in the array, in which the said connector support means (19) are themselves supported on a support member (14) defining a support plane,
**characterised in that** the connector support means (19) are located on one side of the said support plane and the optical fibre organiser means (26) are located on the other side of the said support plane, the support member (14) being movable between two positions in which opposite faces thereof are accessible respectively.

2. A distribution rack as claimed in Claim 1, in which the said connector support means (19) comprise an apertured carrier for a plurality of connectors (21, 22), which defines a connector plane in which corresponding parts of adjacent connectors lie, the said connector plane lying between 0° and 90° with respect to the said support plane.

3. A distribution rack as claimed in Claim 2, in which the said connector support means (19) comprise a patch panel having a plurality of apertures in rows and columns for supporting respective connectors (21,22) of the array.

4. A distribution panel as claimed in any of Claims 1 to 3, in which the said support member (14) has means to allow connector fibres (23) to pass around one edge (24) thereof from the connector array to the optical fibre organiser means (26).

5. A distribution rack as claimed in any preceding claim, in which the optical fibre organiser means (26) comprise a plurality of projections extending from the said support member (14).

6. A distribution rack as claimed in any preceding claim, in which the said support member (14) also has means (16) for supporting a plurality of splices (29) between incoming fibres (17) and one end of respective connector fibres (18) provided with connectors (22) at their other ends.

7. A distribution rack as claimed in any preceding claim, in which the said support member (14) is movable by turning about an axis lying in the said support plane defined thereby, between the said two positions in which opposite sides of the support member are accessible from a given access position.

8. A distribution rack as claimed in any of claims 1 to 6, in which the said support member (14) is movable by sliding in a direction generally transverse the support plane between the said two positions in which opposite sides of the support member are accessible form a given access position.

9. A distribution rack as claimed in Claim 7, in which the optical fibres (17) entering the rack pass through a guide duct (9) positioned between respective axes about which the support members (14) are turnable.

10. A distribution rack as claimed in Claim 7, in which the optical fibres (17) entering the rack pass through a guide duct (9) at least part of which is carried on or by a said support member (14).

11. A distribution rack as claimed in any preceding claim, in which the said support member (14) is a panel.

12. A distribution rack as claimed in any of Claims 1 to 11, in which the said support member (14) is an open frame.

13. A distribution rack as claimed in any preceding claim, in which the said support member (14) is turnable about a substantially vertical axis (x-x).

14. A distribution rack as claimed in any of claims from 2 to 13, in which an edge (24) of the support member (14) about which the fibres pass from one side to the other in use has bend control means (25) for limiting the bending of the fibres to be not less than a minimum acceptable bend radius.

15. A distribution rack as claimed in any of claims 2 to 14, in which the said connector plane lies orthogonally of the support plane.
